# FASCICULE DE BREVET EUROPEEN

(11) **EP 1 793 142 B1**
(45) Date de publication et mention de la délivrance du brevet: **24.06.2009**
(21) Numéro de dépôt: 06124906.6
(22) Date de dépôt: 28.11.2006
(51) Int. Cl.: F16F 15/134

(54) **Double volant amortisseur**
Zwei-Massen-Schwungrad
Dual mass flywheel

(30) Priorité: 30.11.2005 FR 0553639
(43) Date de publication de la demande: 06.06.2007
(73) Titulaire: Valeo Embrayages, 80009 Amiens Cedex 1 (FR)
(72) Inventeur: Fenioux, Daniel, 80480, Saleux (FR)
(74) Mandataire: Lemaire, Marc

(56) Documents cités:
- EP-A2- 0 522 718
- DE-A1- 4 229 416
- DE-A1- 10 206 317
- FR-A- 2 742 509
- FR-A- 2 769 676
- FR-A- 2 812 920
- US-A- 6 131 487

## Description

L'invention concerne un double volant amortisseur, en particulier pour véhicule automobile.

Il est maintenant usuel, au moins pour les véhicules équipés d'un moteur puissant, de monter un double volant amortisseur entre le vilebrequin du moteur et l'embrayage, pour mieux absorber et amortir les vibrations et à-coups générés par le moteur. Ce double volant amortisseur comprend deux volants d'inertie coaxiaux (un volant primaire monté fixement en bout du vilebrequin et un volant secondaire formant le plateau de réaction de l'embrayage), le volant secondaire étant centré sur le volant primaire au moyen d'un palier. Un amortisseur de torsion à ressorts et à moyens de friction est monté entre les deux volants pour transmettre un couple de rotation d'un volant à l'autre tout en absorbant et en amortissant les vibrations et les à-coups.

Les ressorts de l'amortisseur sont souvent à disposition circonférentielle autour de l'axe de rotation et sont en général pré-cintrés pour mieux s'adapter à leurs logements dans une chambre torique formée par l'un des volant et partiellement remplie de graisse. Les extrémités des ressorts viennent en appui sur des butées solidaires des volants, agencées de sorte que toute rotation ou oscillation d'un volant par rapport à l'autre provoque une compression des ressorts de l'amortisseur dans un sens ou dans l'autre et soit contrariée par cette compression.

Une caractéristique des doubles volants amortisseurs est qu'ils présentent une fréquence de résonance pour une vitesse de rotation du moteur inférieure au régime de ralenti, de sorte que l'on passe par la résonance à chaque démarrage et à chaque arrêt du moteur. L'amortisseur de torsion doit pouvoir supporter cette résonance qui se traduit par un pic du couple de rotation transmis au volant secondaire et pour lequel les ressorts de l'amortisseur sont comprimés au maximum, leurs spires venant en appui les unes sur les autres.

Dans certaines circonstances, par exemple lors d'un démarrage manqué, le phénomène de résonance est encore accentué et les ressorts comprimés au maximum sont soumis à des chocs violents qui peuvent provoquer la rupture de leurs extrémités et/ou un désenroulement des ressorts et/ou un glissement des spires des ressorts les unes sur les autres en direction de l'axe de rotation, ce qui entraîne le blocage et la mise hors service du double volant amortisseur.

Il est donc important de veiller à ce que les ressorts de l'amortisseur puissent travailler dans les meilleures conditions possibles, pour mieux supporter ces conditions extrêmes et prolonger la durée de service du double volant amortisseur.

Pour cela, on a déjà proposé de meuler les extrémités des ressorts de l'amortisseur de façon à ce qu'elles présentent une surface plane perpendiculaire à l'axe des ressorts permettant un appui correct sur les butées solidaires des volants. On a constaté que cela augmente de façon significative la durée de service des ressorts.

Il a également été proposé d'équiper les doubles volants amortisseurs de ressorts ayant des raideurs différentes pour une meilleure absorption des vibrations et des à-coups générés par le moteur, aussi bien au ralenti qu'à pleine charge. Le document FR-A1-2,769,676 décrit un double volant amortisseur de ce type dans lequel les ressorts de l'amortisseur sont associés par groupes de trois, les ressorts de chaque groupe ayant des raideurs différentes.

La présente invention a pour but d'améliorer encore les performances de ces doubles volants amortisseurs et de prolonger leur durée de service de façon notable.

Elle propose à cet effet un double volant amortisseur, en particulier pour véhicule automobile, comprenant deux volants d'inertie coaxiaux centrés et guidés l'un sur l'autre au moyen d'un palier et un amortisseur de torsion agencé entre les volants pour la transmission d'un couple de rotation d'un volant à l'autre, cet amortisseur comprenant des ressorts à disposition circonférentielle et dont les extrémités viennent en appui sur des butées solidaires des volants, et où l'amortisseur comprend au moins une paire de ressorts dans laquelle deux ressorts de même diamètre ayant des raideurs différentes et des pas inversés sont disposés bout à bout entre les butées précitées solidaires des volants, caractérisé en ce que les extrémités des ressorts qui sont face à face sont meulées pour former des surfaces planes d'appui, qui sont sensiblement perpendiculaires aux axes des ressorts et qui sont directement en appui l'une sur l'autre.

Le montage en série et bout à bout des ressorts de l'amortisseur selon l'invention assure une bonne absorption des vibrations aux divers régimes de fonctionnement du moteur et l'utilisation de ressorts à pas inversés optimise le contact entre les extrémités meulées des deux ressorts, qui s'appliquent l'une sur l'autre sur la quasi-totalité des parties meulées des spires. Lorsque les ressorts sont comprimés fortement, leurs extrémités ont tendance à tourner autour de l'axe des ressorts et les deux extrémités qui se trouvent en regard l'une de l'autre (qui seront appelées secondes extrémités dans ce qui suit, par opposition aux premières extrémités des ressorts qui viennent en appui sur les butées solidaires des volants) ont tendance à tourner dans le même sens, ce qui conserve un appui de qualité des deux ressorts l'un sur l'autre.

De préférence, les parties meulées des extrémités des ressorts s'étendent sur plus de 180° autour de l'axe des ressorts et avantageusement sur 270° environ.

Avantageusement, les premières extrémités des ressorts viennent directement en appui sur les butées solidaires des volants.

Cela permet de ne pas utiliser de coupelles d'appui qui ont l'inconvénient d'augmenter la masse en rotation et de générer des bruits et des chocs, notamment au régime de ralenti.

Selon une autre caractéristique de l'invention, les extrémités meulées des ressorts se terminent par des pointes qui sont situées sur la partie radialement interne des ressorts et qui sont rabattues à l'intérieur des ressorts.

Ce rabat vers l'intérieur des ressorts des pointes d'extrémités des spires meulées permet de protéger ces pointes, qui peuvent être relativement fragiles en raison de leur faible épaisseur, et d'éviter leur rupture lorsque les ressorts sont comprimés au maximum.

L'invention sera mieux comprise et d'autres caractéristiques, détails et avantages de celle-ci apparaîtront plus clairement à la lecture de la description qui suit, faite à titre d'exemple en référence aux dessins annexés dans lesquels :
La figure 1 est une vue de face avec arrachement partiel d'un double volant amortisseur selon l'état de la technique connu.
La figure 2 est une vue partielle en perspective, à grande échelle, des extrémités de deux ressorts de l'amortisseur de torsion selon l'invention.

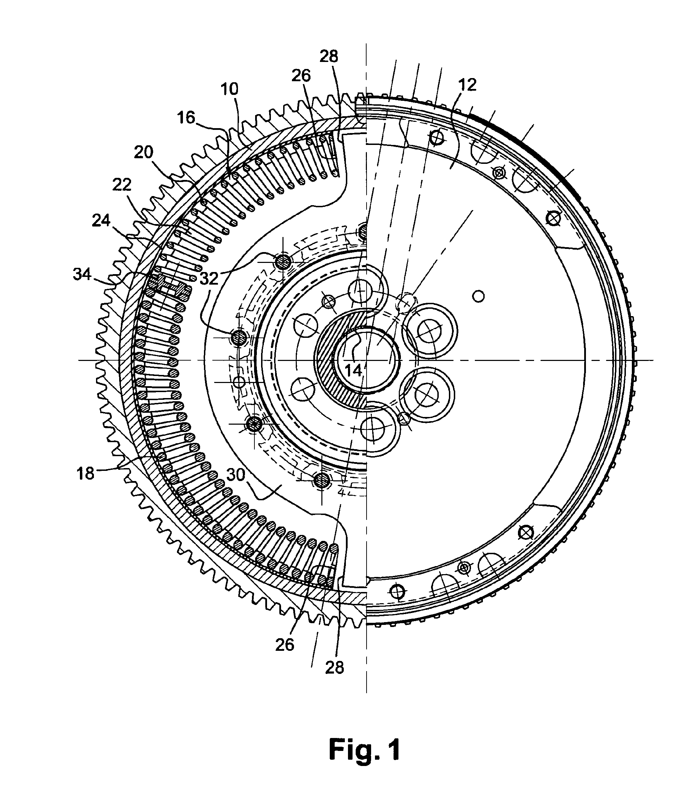

Le double volant amortisseur de la figure 1 comprend un volant d'inertie primaire 10 destiné à être monté fixement en bout d'un vilebrequin d'un moteur à combustion interne de véhicule automobile et un volant d'inertie secondaire 12 qui est centré et guidé sur le volant primaire 10 au moyen d'un palier 14 qui peut être un palier lisse ou un roulement à billes, le volant secondaire 12 formant le plateau de réaction d'un embrayage relié à l'arbre d'entrée d'une transmission, par exemple l'arbre d'entrée d'une boîte de vitesses.

Un amortisseur de torsion 16 formé de ressorts et de moyens de friction est agencé entre les deux volants d'inertie pour transmettre un couple de rotation de l'un à l'autre, entre le vilebrequin du moteur et l'arbre d'entrée de transmission.

Cet amortisseur de torsion comprend, dans l'exemple représenté, deux paires de ressorts 18, 20 qui sont logés dans une chambre torique 22 formée par l'un des volants (le volant primaire 10 dans l'exemple représenté), partiellement remplie de graisse pour diminuer les frottements et dans laquelle est montée une goulotte 24 formant une surface d'appui radialement externe pour les ressorts.

Chaque paire de ressorts 18, 20 s'étend sur un peu moins de 180° entre des butées 26 formées par le volant primaire 10 ou solidaires du volant primaire 10 et des butées 28 formées par des pattes radiales d'un voile annulaire 30 fixé au volant secondaire 12 par des moyens tels que par exemple des rivets 32.

Les ressorts 18, 20 de chaque paire sont des ressorts à spires hélicoïdales et ont sensiblement le même diamètre extérieur, le ressort 18 étant formé par enroulement d'un fil d'un diamètre supérieur à celui du fil constituant l'autre ressort 20 et ayant une raideur supérieure à celle du ressort 20.

Les premières extrémités des ressorts, qui viennent en appui sur les butées 26 du volant primaire et sur les pattes radiales 28 du voile annulaire 30, sont meulées pour former des surfaces d'appui qui sont planes et sensiblement perpendiculaires aux axes des ressorts.

Les secondes extrémités des ressorts sont également meulées, pour former des surfaces planes d'appui.

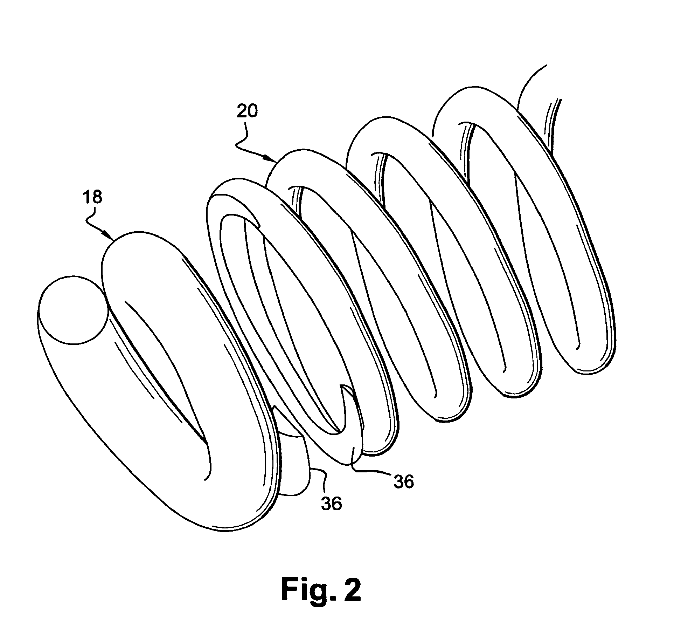

Les deux ressorts 18, 20 mis bout à bout dans chaque paire ont des pas inversés, comme on le voit bien sur les figures 1 et 2 et les pointes 36 qui forment les extrémités de ces ressorts se trouvent sur la partie ou la
moitié radialement interne de chaque ressort, c'est-à-dire du côté opposé à la goulotte 24 d'appui et de guidage de ces ressorts.

Le meulage des spires d'extrémité des ressorts est effectué sur la plus grande partie de chaque spire d'extrémité,soit sur environ trois-quarts de cercle. Ainsi, les extrémités meulées des ressorts présentent des surfaces planes d'appui aussi bien sur les butées 26 du volant primaire 10 que sur les pattes radiales 28 du voile annulaire 30 fixé sur le volant secondaire 12.

Comme représenté en figure 2, les secondes extrémités des deux ressorts 18, 20 de chaque paire s'appliquent directement l'une sur l'autre, aucune coupelle d'appui 34 n'étant prévue entre ces extrémités. Le meulage des extrémités des ressorts fait que les deux ressorts peuvent s'appuyer l'un sur l'autre de façon correcte par des faces planes perpendiculaires à leurs axes et qui s'étendent sur environ trois-quarts de cercle. L'utilisation de ressorts à pas inversés fait que, à la compression maximale de ces ressorts, leurs secondes extrémités en appui l'une sur l'autre ont tendance à tourner dans le même sens, ce qui garantit la qualité de l'appui des ressorts l'un sur l'autre dans des conditions extrêmes.

De plus, il est avantageux que la pointe 36 terminant chaque extrémité meulée des ressorts soit rabattue vers l'intérieur du ressort, cette pointe ayant ainsi un rayon de courbure autour de l'axe du ressort qui est plus faible que le rayon de courbure du restant de la spire d'extrémité. On évite ainsi, quand les deux ressorts sont comprimés l'un sur l'autre, que ces pointes 36 relativement fragiles du fait de leur faible épaisseur soient soumises à des chocs et risquent de se rompre. Leur disposition à l'intérieur du ressort permet de ne pas les amener en butée sur des éléments beaucoup plus résistants qui pourraient provoquer leur rupture.

Les ressorts 18, 20 de chaque paire sont pré-cintrés avant leur montage dans la chambre 24 du volant primaire 10. Ce pré-cintrage leur interdit toute rotation autour de leur axe en fonctionnement.

Au régime de ralenti, les vibrations et à-coups de faible amplitude et de faible énergie générés par le moteur sont absorbés par les ressorts 20 de chaque paire de ressorts de l'amortisseur de torsion. L'absorption des vibrations et des à-coups accompagnant la transmission d'un couple relativement élevé se traduit par une compression maximale des ressorts 20 et par une compression au moins partielle des ressorts 18.

Au passage par la fréquence de résonance, au démarrage et à l'arrêt du moteur, les ressorts 18 et 20 de chaque paire sont comprimés au maximum entre les butées 26 du volant primaire et les pattes radiales 28 du voile 30 fixé au volant secondaire. Grâce au meulage des extrémités des ressorts, à l'utilisation de ressorts 18, 20 de pas inverses et au rabattement vers l'intérieur des pointes 36 d'extrémité des ressorts, la durée de service des doubles volants amortisseurs est notablement accrue.

Des essais comparatifs ont été réalisés sur des doubles volants amortisseurs équipés de ressorts de même pas, de ressorts de pas inversés, en appui directement l'un sur l'autre, ces ressorts ayant ou non des pointes d'extrémités 36 rabattues vers l'intérieur.

Ces essais comparatifs ont montré que l'invention permet de multiplier par un coefficient compris entre 5 et 10 la durée de vie d'un double volant amortisseur lorsqu'il est équipé de ressorts à pas inversés, à extrémités meulées en appui l'une sur l'autre et à pointes d'extrémité 36 rabattues vers l'intérieur. Les durées de service ainsi obtenues sont très nettement supérieures à celles requises dans les cahiers des charges des constructeurs automobiles.

## Revendications

1. Double volant amortisseur, en particulier pour véhicules automobiles, comprenant deux volants d'inertie coaxiaux (10, 12) centrés et guidés l'un sur l'autre au moyen d'un palier (14), et un amortisseur de torsion (16) agencé entre les volants pour la transmission d'un couple de rotation d'un volant à l'autre, cet amortisseur comprenant des ressorts (18, 20) à disposition circonférentielle et dont les extrémités viennent en appui sur des butées (26, 28) solidaires des volants, l'amortisseur (16) comprenant au moins une paire de ressorts (18, 20) dans laquelle deux ressorts de même diamètre ayant des raideurs différentes et des pas inverses sont disposés bout à bout entre les butées précitées (26, 28) solidaires des volants, **caractérisé en ce que** les extrémités des ressorts (18, 20), qui sont en regard l'une de l'autre, sont meulées et forment des surfaces planes sensiblement perpendiculaires à l'axe des ressorts qui sont directement en appui l'une sur l'autre.

2. Double volant amortisseur selon la revendication 1, **caractérisé en ce que** les parties meulées des extrémités des ressorts s'étendent sur plus de 180° autour de l'axe des ressorts.

3. Double volant amortisseur selon l'une des revendications précédentes, **caractérisé en ce que** les autres extrémités des ressorts sont meulées et viennent directement en appui sur les butées (26, 28) solidaires des volants.

4. Double volant amortisseur selon l'une des revendications précédentes, **caractérisé en ce que** les extrémités meulées des ressorts (18, 20) se terminent par des pointes (36) qui sont situées sur la partie radialement interne des ressorts et qui sont rabattues à l'intérieur des ressorts.

## Claims

1. Double damping flywheel, in particular for motor vehicles, comprising two coaxial inertia flywheels (10, 12) centred and guided one on the other by means of a bearing (14) and a torsion damper (16) arranged between the flywheels for transmitting a rotation torque from one flywheel to another, this damper comprising circumferentially disposed springs (18, 20), the ends of which come into abutment on stops (26, 28) fixed to the flywheels, the damper (16) comprising at least one pair of springs (18, 20) in which two springs with the same diameter having different stiffnesses and opposite pitches that are disposed end to end between the aforementioned stops (26, 28) fixed to the flywheels, **characterised in that** the ends of the springs (18, 20) that are facing each other are ground and form flat surfaces substantially perpendicular to the axis of the springs, which are directly in abutment to one on the other.

2. Double damping flywheel according to claim 1, **characterised in that** the ground parts of the ends of the springs extend over more than 180° around the axis of the springs.

3. Double damping flywheel according to one of the preceding claims, **characterised in that** the other ends of the springs are ground and come directly into abutment on the stops (26, 28) secured to the flywheel.

4. Double damping flywheel according to one of the preceding claims, **characterised in that** the ground ends of the springs (18, 20) terminate in tips (36) that are situated on the radically internal part of the springs and are folded over inside the springs.

## Patentansprüche

1. Zweimassen-Dämpfungs-Schwungrad, insbesondere für Kraftfahrzeuge, umfassend zwei koaxiale Schwungräder (10, 12), die durch ein Lager (14) relativ zueinander zentriert und geführt sind, und einen zur Übertragung eines Drehmoments von einem auf das andere Schwungrad zwischen diesen angeordneten Torsionsdämpfer (16), welcher umfangsmäßig wirksame Federn (18, 20) umfasst, deren Enden in Auflage auf fest mit den Schwungrädern verbundenen Anschlägen (26, 28) sind, wobei der Dämpfer (16) wenigstens ein Paar von Federn (18, 20) umfasst, bei dem zwei Federn mit gleichem Durchmesser verschiedene Steifigkeiten haben und mit entgegengesetzten Gewindesteigungen aneinander zwischen den genannten fest mit den Schwungrädern verbundenen Anschlägen (26, 28) angeordnet sind, **dadurch gekennzeichnet, dass** die einander gegenüberliegenden Enden der Federn (18, 20) angeschliffen sind und in etwa senkrecht zur Achse der Feder stehende ebene Flächen bilden, die unmittelbar aneinander anliegen.

2. Zweimassen-Dämpfungs-Schwungrad nach Anspruch 1, **dadurch gekennzeichnet, dass** sich die angeschliffenen Bereiche der Federenden um mehr als 180° um die Achse der Federn herum erstrecken.

3. Zweimassen-Dämpfungs-Schwungrad nach einem der vorherigen Ansprüche, **dadurch gekennzeichnet, dass** die anderen Enden der Federn angeschliffen sind und unmittelbar in Auflage auf den fest mit den Schwungrädern verbundenen Anschlägen (26, 28) kommen.

4. Zweimassen-Dämpfungs-Schwungrad nach einem der vorherigen Ansprüche, **dadurch gekennzeichnet, dass** die angeschliffenen Enden der Federn (18, 20) an Stellen (36) enden, die sich auf dem radial innenliegenden Teil der Federn befinden und die in das Innere der Federn umgelegt sind.
